# EUROPEAN PATENT APPLICATION

(11) **EP 4 644 195 A1**
(43) Date of publication of application: **05.11.2025**
(21) Application number: 24173872.3
(22) Date of filing: 02.05.2024
(51) Int. Cl.: B60T 7/12, B60T 13/26, B60T 17/22

(54) **A VEHICLE LOADING SAFETY SYSTEM AND A METHOD FOR INCREASING SAFETY DURING A LOADING EVENT FOR A PARKED VEHICLE**

(71) Applicant: VOLVO TRUCK CORPORATION, 405 08 Göteborg (SE)
(72) Inventor: RATHOD, Utpal, 560093 Bangalore (IN)
(74) Representative: Zacco Sweden AB

(57) **Abstract**

A vehicle loading safety system comprising a processing circuitry configured to receive parking brake input indicating that a parking brake of the vehicle is currently engaged, receive gradient input indicating a gradient of the ground on which the vehicle is standing and compare said indicated gradient with a predefined threshold gradient. The processing circuitry is configured to determine based on the received inputs that the vehicle is currently parked in a slope at a gradient which is larger than the predefined threshold gradient. The processing circuitry is configured to receive vehicle load input indicating a value of the actual vehicle load, and compare the value of the actual vehicle load with a maximum allowable load value, and to determine that the value of the actual vehicle load exceeds the maximum allowable load value, and to control, based on the determination, an activation of a safety action.

## Description

### TECHNICAL FIELD

The disclosure relates generally to a safety system and a method for increasing safety with respect to a vehicle. In particular aspects, the disclosure relates to a vehicle loading safety system and a method for increasing safety during a loading event for a parked vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When a heavy-duty vehicle, such as a truck, is getting loaded on a gradient, (i.e. the surface on which the vehicle stands is inclined relative to the horizontal), and the parking brake force is not sufficient to hold the vehicle on the gradient, then vehicle may start rolling. This may lead to safety critical issues to surroundings, such as another vehicle nearby or to the person loading the vehicle, or to pedestrians, or to surrounding infrastructure, etc.

### SUMMARY

According to a first aspect of the disclosure, there is provided a vehicle loading safety system. The vehicle loading safety system comprises a computer system comprising a processing circuitry configured to:
- receive, from a parking brake subsystem, parking brake input indicating that a parking brake of the vehicle is currently engaged,
- receive, from a gradient determining subsystem, gradient input indicating a gradient of the ground on which the vehicle is standing, and compare said indicated gradient with a predefined threshold gradient,
- determine, based on the received parking brake input and the received gradient input, that the vehicle is currently parked in a slope at a gradient which is larger than the predefined threshold gradient,
- receive, from a load determining subsystem, vehicle load input indicating a value of the actual vehicle load, and compare the value of the actual vehicle load with a maximum allowable load value,
- determine, based on the received vehicle load input, that the value of the actual vehicle load exceeds the maximum allowable load value, and
- control, based on the determination that the value of the actual vehicle load exceeds the maximum allowable load value, an activation of a safety action.

The first aspect of the disclosure may seek to reduce the risk of accidents happening due to mismatch between parking brake force and load, in particular in view of the gradient of the ground on which the vehicle is standing. A technical benefit may include that the system reduces the risk of an accident in case a user loads the vehicle more than, for example, its design load. By detecting the gradient of a slope in which the vehicle is parked, and upon determining that the actual vehicle load exceeds a maximum allowable load value, safety measures are taken.

The predefined threshold gradient, may suitably be a value at which there is an increased risk of vehicle starting to roll in case of overloading. Purely as an illustrative example, the predefined threshold gradient may, for instance, be selected in the range of 15°-18°.

The gradient of the ground may be provided by any suitable equipment. For example, the gradient determining subsystem may include an inclinometers/tilt sensor, gyroscope, etc. and/or may have access to topographic maps, etc.

The maximum allowable load may, value n some examples be a predetermined fixed value. In other examples, the maximum allowable load value may be variable value, for example depending on the received gradient input. Irrespective of which, the maximum allowable load value should suitably be set with sufficient safety margin in relation to a load at which the vehicle would start rolling.

Optionally in some examples, including in at least one preferred example, said safety action may comprise issuing an alarm or warning to a driver of the vehicle. A technical benefit may include that the driver may then be warned in due time and the driver can therefore remove load from the vehicle in due time rather than continuing loading the vehicle. The alarm or warning may be visual, audible or tactile, etc. It may, for example, be displayed on a dashboard or a voice message inside or outside the cab, etc.

Optionally in some examples, including in at least one preferred example, said safety action may comprise engaging one or more other brakes of the vehicle in addition to the already engaged parking brake. A technical benefit may include that additional braking force is thereby applied, further reducing the risk of the vehicle starting to roll. The additional braking force may thus be regarded as compensating for the additional load (i.e. the load exceeding the maximum allowable load value).

Optionally in some examples, including in at least one preferred example, said safety action may comprise engaging a service brake of the vehicle. A technical benefit may include that a safety brake can provide a high additional braking power, further reducing the risk of the vehicle starting to roll.

Optionally in some examples, including in at least one preferred example, the vehicle loading safety system may further comprise:
a pressurized reservoir containing a pressurized fluid,
service brakes having brake chambers,
a fluid passage extending from a first outlet of the pressurized reservoir to the brake chambers,
a driver-operated foot valve provided in the fluid passage for controlling the pressurized fluid to be delivered to the brake chambers for engaging the service brakes,
the pressurized reservoir having a second outlet,
a bypass passage extending from the second outlet to a position at the fluid passage between the foot valve and the brake chambers,
wherein said safety action comprises opening said bypass passage so that the pressurized fluid reaches the brake chambers so that the service brakes are engaged even if the foot valve is closed. A technical benefit may include that the service brakes can hereby be engaged automatically without involvement of the driver, thus increasing safety.

Optionally in some examples, including in at least one preferred example, the vehicle loading safety system may further comprise a valve, such as a solenoid valve, controlling the fluid flow through the bypass passage, wherein the valve is in a normally closed position, and wherein upon determination by the processing circuitry that the value of the actual vehicle load exceeds the maximum allowable load value, the processing circuitry is configured to open the valve so as to activate the safety action. A technical benefit may include that operating a valve allows for quick activation of the safety action.

Optionally in some examples, including in at least one preferred example, said safety action may comprise:
- lowering a lift axle, such as a pusher axle or a tag axle, so that wheels of the lift axle come into contact with the ground, and
- engaging brakes of the lift axle.
A technical benefit may include that hereby additional braking power can be provided, thus further increasing the safety.

Optionally in some examples, including in at least one preferred example, said maximum allowable load value is a predefined maximum allowable load value stored in an electronic memory included in, or accessible by, the processing circuitry. A technical benefit may include that having a predefined maximum allowable load value allows for a simple manner to determine whether the safety action should be activated or not.

Optionally in some examples, including in at least one preferred example, said maximum allowable load value is a variable maximum allowable load value wherein the processing circuitry determines the maximum allowable load value based on the received gradient input. A technical benefit may include that a more accurate control is allowed. In particular, if the gradient is relatively small then a higher maximum allowable load value may be provided, whereas if the gradient is relatively high then a smaller maximum allowable load value may be provided. The processing circuitry may for example comprise or have access to a look-up table in which different maximum allowable load value are associated with different gradients, or the processing circuitry may calculate the maximum allowable load value based on the current gradient, based on a suitable function.

According to a second aspect of the disclosure, there is provided a vehicle comprising the vehicle loading safety system according to the first aspect. Similarly to the first aspect, the second aspect of the disclosure may seek to reduce the risk of accidents happening due to mismatch between parking brake force and load, in particular in view of the gradient of the ground on which the vehicle is standing. Technical benefits may largely correspond to those discussed with respect to the first aspect, including any examples thereof.

According to a third aspect of the disclosure, there is provided a method for increasing safety during a loading event for a parked vehicle, the method comprising:
- receiving, by processing circuitry of a computer system, from a parking brake subsystem, parking brake input indicating that a parking brake of the vehicle is currently engaged,
- receiving, by the processing circuitry, from a gradient determining subsystem, gradient input indicating a gradient of the ground on which the vehicle is standing, and comparing, by the processing circuitry, said indicated gradient with a predefined threshold gradient,
- determining, by the processing circuitry, based on the received parking brake input and the received gradient input, that the vehicle is currently parked in a slope at a gradient which is larger than the predefined threshold gradient,
- receiving, by the processing circuitry, from a load determining subsystem, vehicle load input indicating a value of the actual vehicle load, and comparing, by the processing circuitry, the value of the actual vehicle load with a maximum allowable load value,
- determining, by the processing circuitry, based on the received vehicle load input, that the value of the actual vehicle load exceeds the maximum allowable load value, and
- controlling, by the processing circuitry, based on the determination that the value of the actual vehicle load exceeds the maximum allowable load value, an activation of a safety action in order to reduce the risk of the vehicle starting to roll during the loading event. Similarly to the first aspect, the third aspect of the disclosure may seek to reduce the risk of accidents happening due to mismatch between parking brake force and load, in particular in view of the gradient of the ground on which the vehicle is standing. Technical benefits may largely correspond to those discussed with respect to the first aspect, including any examples thereof.

Herein below follows examples of the method of the third aspect. Technical benefits of each example may include corresponding benefits as discussed in relation to similar examples of the first aspect.

Optionally in some examples of the method, including in at least one preferred example, said safety action may comprise issuing an alarm or warning to a driver of the vehicle.

Optionally in some examples of the method, including in at least one preferred example, said safety action may comprise engaging one or more other brakes of the vehicle in addition to the already engaged parking brake.

Optionally in some examples of the method, including in at least one preferred example, said safety action may comprise engaging a service brake of the vehicle.

Optionally in some examples of the method, including in at least one preferred example, the vehicle may comprise:
a pressurized reservoir containing a pressurized fluid,
service brakes having brake chambers,
a fluid passage extending from a first outlet of the pressurized reservoir to the brake chambers,
a driver-operated foot valve provided in the fluid passage for controlling the pressurized fluid to be delivered to the brake chambers for engaging the service brakes,
the pressurized reservoir having a second outlet,
a bypass passage extending from the second outlet to a position at the fluid passage between the foot valve and the brake chambers,
wherein said safety action may comprise opening said bypass passage so that the pressurized fluid reaches the brake chambers so that the service brakes are engaged even if the foot valve is closed.

Optionally in some examples of the method, including in at least one preferred example, the vehicle may further comprise a valve, such as a solenoid valve, controlling the fluid flow through the bypass passage, wherein the valve is in a normally closed position, wherein the method may further comprise, upon determination by the processing circuitry that the value of the actual vehicle load exceeds the maximum allowable load value, opening the valve so as to activate the safety action.

Optionally in some examples of the method, including in at least one preferred example, said safety action may comprise:
- lowering a lift axle, such as a pusher axle or a tag axle, so that wheels of the lift axle come into contact with the ground, and
engaging brakes of the lift axle.

Optionally in some examples of the method, including in at least one preferred example, said maximum allowable load value may be a predefined maximum allowable load value stored in an electronic memory included in, or accessible by, the processing circuitry.

Optionally in some examples of the method, including in at least one preferred example, said maximum allowable load value may be a variable maximum allowable load value, wherein the method may further comprise: determining, by the processing circuitry, the maximum allowable load value based on the received gradient input.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic illustration of a vehicle standing in a slope and being loaded.
**FIG. 2** is a schematic illustration of a vehicle loading safety system according to at least one example of this disclosure.
**FIG. 3** is a schematic illustration of examples of different safety actions that may be activated.
**FIG. 4** is a schematic illustration of a method according to at least one example of this disclosure.
**FIG. 5** is a schematic illustration of some components of a vehicle loading safety system according to at least one example of this disclosure.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

When a heavy-duty vehicle, such as a truck, is getting loaded on a gradient and the parking brake force is not sufficient to hold the vehicle on the gradient, the heavy-duty vehicle can start rolling backward and may create a dangerous situation, e.g. to another vehicle standing behind or in front of the present heavy-duty vehicle, to a person loading the truck, to a pedestrian, to surrounding infrastructure, etc. The present disclosure aims at reducing the risk of an accident in case a user loads the vehicle more than for example its design load. According to the present disclosure the gradient of the slope in which the vehicle is parked is detected, and upon determining that the actual vehicle load exceeds a maximum allowable load value, appropriate safety measures are taken.

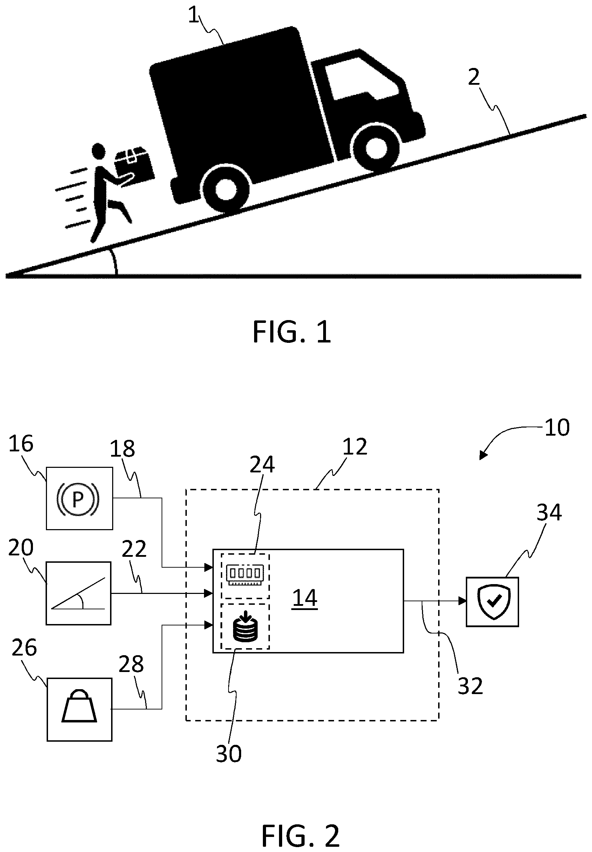

**FIG. 1** is a schematic illustration of a vehicle **1** standing in a slope **2** and being loaded. More specifically, the illustrated vehicle **1** is a heavy-duty vehicle in the form of a truck. However, the teachings of the present disclosure may be implemented for other types of vehicles as well, including for example a tractor-trailer combination. Although **FIG. 1** illustrates the vehicle **1** being loaded when standing in an uphill slope **2,** the teachings of the present disclosure may be implemented also when standing in a downhill slope. The vehicle **1** may comprise a vehicle loading safety system, such as the ones that have previously been discussed in this disclosure, and such as the ones that will be discussed herein below.

**FIG. 2** is a schematic illustration of a vehicle loading safety system **10** according to at least one example of this disclosure. The vehicle loading safety system **10** may, for instance, be included in the vehicle **1** of **FIG. 1** or in other types of vehicles.

The vehicle loading safety system **10** comprises a computer system **12.** In its turn the computer system **12** comprises a processing circuitry **14.** The processing circuitry **14** is configured to receive, from a parking brake subsystem **16,** parking brake input **18** indicating that a parking brake of the vehicle is currently engaged. It should be understood that any input to the processing circuitry **14,** such as the parking brake input **18,** may be in any suitably form. For example, any input may relate to a digital signal or an analogue signal. In either case the signal may carry data from a device to the processing circuitry **14.** For instance, the input may be a logic input that describes a bit stream; the input may be considered to be a sequence of codes represented by a physical quantity; the input may refer to a time-varying voltage, current or electromagnetic wave that carries information, etc.

The processing circuitry **14** is also configured to receive, from a gradient determining subsystem **20,** gradient input **22** indicating a gradient of the ground on which the vehicle is standing. As mentioned previously, the gradient determining subsystem **20** may include an inclinometers/tilt sensor, gyroscope, etc. and/or may have access to topographic maps, etc. The processing circuitry **14** is further configured to compare said indicated gradient with a predefined threshold gradient. The predefined threshold gradient may, for example, be stored in an electronic memory **24** included in the processing circuitry **14** or otherwise accessible by the processing circuitry **14.**

Based on the received parking brake input **18** and the received gradient input **22,** the processing circuitry **14** can determine whether or not the vehicle is currently parked in a slope at a gradient which is larger than the predefined threshold gradient. If that is the case then the vehicle is parked in a slope in which a dangerous situation may arise if it becomes overloaded.

The processing circuitry **14** is configured to received, from a load determining subsystem **26,** vehicle load input **28** indicating a value of the actual vehicle load. The load determining subsystem **26** may for example include conventional load sensors. The processing circuitry **14** compares the value of the actual vehicle load with a maximum allowable load value. The maximum allowable load value may in some examples, be stored in an electronic memory **24** of the processing circuitry **14,** and may in other examples be stored in an electronic memory otherwise accessible by the processing circuitry **14.** The maximum allowable load value may thus, in at least some examples, be a predefined maximum allowable load value. However, in other examples the maximum allowable load value may be a variable maximum allowable load value. In the latter case, the processing circuitry **14** may determine the current maximum allowable load value based on the received gradient input, e.g. by accessing information from a look-up table or a database **30.** Regardless of if the maximum allowable load value is predefined or variable, it should be understood that the maximum allowable load value is selected such that for loads below that value, the engaged parking brake should provide enough force to keep the vehicle at a standstill in the slope. Furthermore, there may suitably be a certain safety margin so that even for loads that are somewhat higher than the maximum allowable load value, the parking brake is still expected to provide sufficient holding force.

Based on the received vehicle load input **28,** the processing circuitry **14** determines whether or not the value of the actual vehicle load exceeds the maximum allowable load value. If that is indeed the case then the processing circuitry **14** controls (illustrated by control output **32**) an activation of a safety action **34** so as to reduce the risk of the vehicle starting to roll. Such an activation may be by any appropriate control instructions which may be an output of any suitably type (similarly to the above discussed different conceivable types of input).

From the above, it should be understood that the processing circuitry **14,** can determine to activate the safety action **34** when the parking brake is applied (which is indicative of a desire to stand still), and the current gradient is larger than the predefined threshold gradient, and the actual vehicle load exceeds the maximum allowable vehicle load.

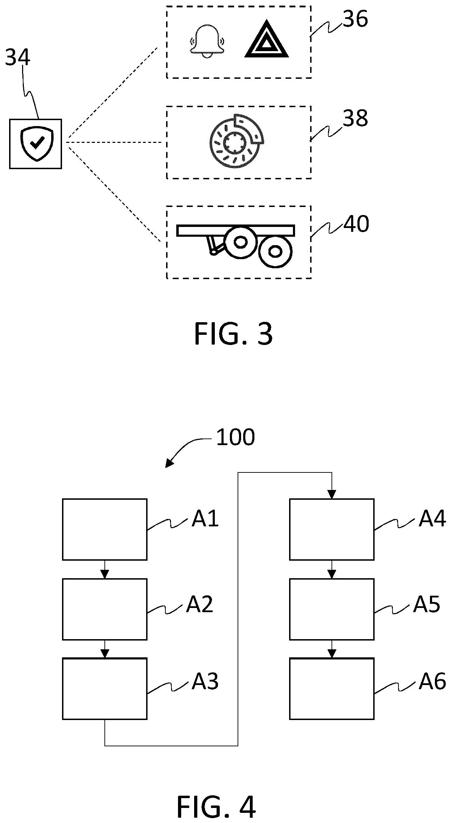

**FIG. 3** is a schematic illustration of examples of different safety actions that may be activated. In particular, the safety action **34** from **FIG. 2** is here in **FIG. 3** represented by three different examples. The processing circuitry may be configured to activate just one safety action or to activate two or more safety actions. The examples illustrated in **FIG. 3** are the following. In some examples, the safety action **34** may comprise issuing an alarm or warning **36** to a driver of the vehicle or to a person loading the vehicle. It can be a visual, audible, tactile alarm or warning, such as a signal or a message. Suitably, an alarm or warning may be issued even though the other safety actions are also activated. This is advantageous as the driver or the person loading the vehicle will be informed of the situation and can therefore suitably remove some of the load from the vehicle, or at least be discouraged from overloading the vehicle even more. Other examples of safety actions **34** may include engaging one or more other brakes **38** of the vehicle in addition to the already engaged parking brake so as to compensate for the additional load. Such other brakes may for example include engaging service brakes of the vehicle. Further examples of safety actions **34** may include lowering a lift axle **40,** such as a pusher axle or a tag axle of the vehicle, so that the wheels of the lift axle come into contact with the ground, and engaging the brake or brakes associated with the lift axle.

**FIG. 4** is a schematic illustration of a method **100** according to at least one example of this disclosure. In particular, **FIG. 4** illustrates a method **100** for increasing safety during a loading event for a parked vehicle, the method **100** comprising:
- receiving **(A1),** by processing circuitry of a computer system, from a parking brake subsystem, parking brake input indicating that a parking brake of the vehicle is currently engaged,
- receiving **(A2),** by the processing circuitry, from a gradient determining subsystem, gradient input indicating a gradient of the ground on which the vehicle is standing, and comparing, by the processing circuitry, said indicated gradient with a predefined threshold gradient,
- determining **(A3),** by the processing circuitry, based on the received parking brake input and the received gradient input, that the vehicle is currently parked in a slope at a gradient which is larger than the predefined threshold gradient,
- receiving **(A4),** by the processing circuitry, from a load determining subsystem, vehicle load input indicating a value of the actual vehicle load, and comparing, by the processing circuitry, the value of the actual vehicle load with a maximum allowable load value,
- determining **(A5),** by the processing circuitry, based on the received vehicle load input, that the value of the actual vehicle load exceeds the maximum allowable load value, and
- controlling **(A6),** by the processing circuitry, based on the determination that the value of the actual vehicle load exceeds the maximum allowable load value, an activation of a safety action in order to reduce the risk of the vehicle starting to roll during the loading event.
It should be understood that the different acts **A1-A6** do not necessarily have to be performed in the listed order. For instance, the acts of receiving the various inputs (acts **A1, A2** and **A4**) may be performed in any order or simultaneously.

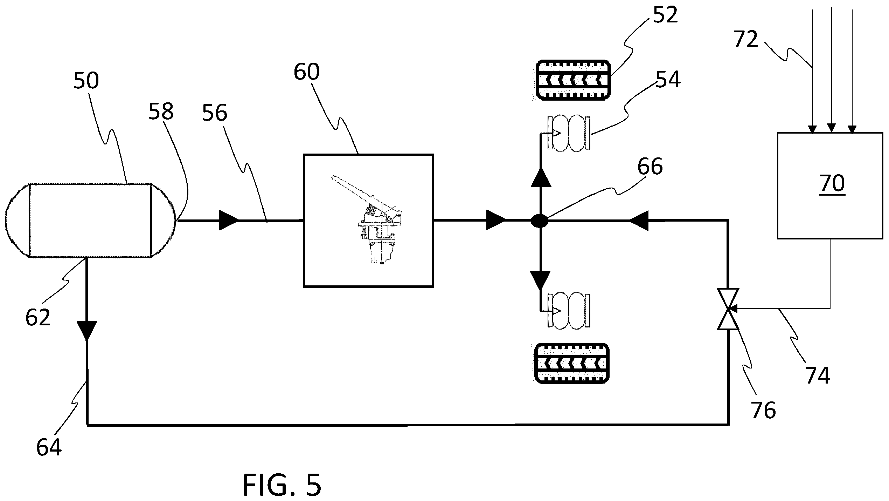

**FIG. 5** is a schematic illustration of some components of a vehicle loading safety system according to at least one example of this disclosure. The vehicle loading safety system of this example may comprise a pressurized reservoir **50** containing a pressurized fluid, such as compressed air. The pressurized reservoir **50** may suitably form part of a primary brake circuit in a heavy-duty vehicle that has a primary and a secondary brake circuitry. Two vehicle wheels **52** are illustrated, and each wheel **52** may be provided with service brakes having brake chambers **54.** A fluid passage **56** may extend from a first outlet **58** of the pressurized reservoir **50** to the brake chambers **54.** A driver-operated foot valve **60** is provided in the fluid passage **56** for controlling the pressurized fluid to be delivered from the pressurized reservoir **50** to the brake chambers **54** for engaging the service brakes. The pressurized reservoir **50** also has a second outlet **62.** A bypass passage **64** extends from the second outlet **62** to a position **66** at the fluid passage **56** between the foot valve **60** and the brake chambers **54.** **FIG. 5** further illustrates a processing circuitry **70** receiving different inputs **72** (such as similar to the inputs discussed with respect to **FIG. 2****).** The processing circuitry **70** may issue at least one control output **74** to activate one or more safety actions. In this illustrated example, a safety action activated by the processing circuitry **70** may comprise opening said bypass passage **64** so that the pressurized fluid reaches the brake chambers **54** so that the service brakes are engaged even if the foot valve is closed **60.** As illustrated in **FIG. 5****,** the vehicle loading safety system may further comprise another valve **76,** such as a solenoid valve. Said other valve **76** may control the fluid flow through the bypass passage **64.** Said other valve **76** may be in a normally closed position, preventing fluid to flow from the second outlet **62** of the pressurized reservoir **50** via the bypass passage **64** to the brake chambers **54.** However, upon determination by the processing circuitry **70** that the value of the actual vehicle load exceeds the maximum allowable load value, then the processing circuitry **70** controls (by said control output **74)** the other valve **76** to open so as to activate the safety action, i.e. in this case to engage the service brakes. In the open position of the other valve **76,** pressurized fluid is allowed to flow from the outlet **62** of the pressurized reservoir **50** via the bypass passage **64** to said point **66** and into the brake chambers **54.**

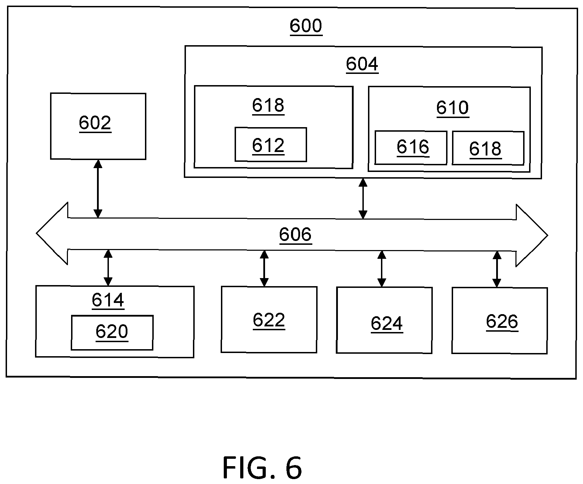

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The processing circuitry **14** in the example of **FIG. 2** and the processing circuitry **70** in the example of **FIG. 5** may, for instance, correspond to the processing circuitry **602** discusses with respect to **FIG. 6****.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A vehicle loading safety system, wherein the vehicle loading safety system comprises a computer system comprising a processing circuitry configured to:
- receive, from a parking brake subsystem, parking brake input indicating that a parking brake of the vehicle is currently engaged,
- receive, from a gradient determining subsystem, gradient input indicating a gradient of the ground on which the vehicle is standing, and compare said indicated gradient with a predefined threshold gradient,
- determine, based on the received parking brake input and the received gradient input, that the vehicle is currently parked in a slope at a gradient which is larger than the predefined threshold gradient,
- receive, from a load determining subsystem, vehicle load input indicating a value of the actual vehicle load, and compare the value of the actual vehicle load with a maximum allowable load value,
- determine, based on the received vehicle load input, that the value of the actual vehicle load exceeds the maximum allowable load value, and
- control, based on the determination that the value of the actual vehicle load exceeds the maximum allowable load value, an activation of a safety action.

Example 2: The vehicle loading safety system according to example 1, wherein said safety action comprises issuing an alarm or warning to a driver of the vehicle.

Example 3: The vehicle loading safety system according to any one of examples 1-2, wherein said safety action comprises engaging one or more other brakes of the vehicle in addition to the already engaged parking brake.

Example 4: The vehicle loading safety system according to any one of examples 1-3, wherein said safety action comprises engaging a service brake of the vehicle.

Example 5: The vehicle loading safety system according to example 4, further comprising:
a pressurized reservoir containing a pressurized fluid,
service brakes having brake chambers,
a fluid passage extending from a first outlet of the pressurized reservoir to the brake chambers,
a driver-operated foot valve provided in the fluid passage for controlling the pressurized fluid to be delivered to the brake chambers for engaging the service brakes,
the pressurized reservoir having a second outlet,
a bypass passage extending from the second outlet to a position at the fluid passage between the foot valve and the brake chambers,
wherein said safety action comprises opening said bypass passage so that the pressurized fluid reaches the brake chambers so that the service brakes are engaged even if the foot valve is closed.

Example 6: The vehicle loading safety system according to example 5, further comprising a valve, such as a solenoid valve, controlling the fluid flow through the bypass passage, wherein the valve is in a normally closed position, and wherein upon determination by the processing circuitry that the value of the actual vehicle load exceeds the maximum allowable load value, the processing circuitry is configured to open the valve so as to activate the safety action.

Example 7: The vehicle loading safety system according to any one of examples 1-6, wherein said safety action comprises:
- lowering a lift axle, such as a pusher axle or a tag axle, so that wheels of the lift axle come into contact with the ground, and
- engaging brakes of the lift axle.

Example 8: The vehicle loading safety system according to any one of examples 1-7, wherein said maximum allowable load value is a predefined maximum allowable load value stored in an electronic memory included in, or accessible by, the processing circuitry.

Example 9: The vehicle loading safety system according to any one of examples 1-7, wherein said maximum allowable load value is a variable maximum allowable load value wherein the processing circuitry determines the maximum allowable load value based on the received gradient input.

Example 10: A vehicle comprising the vehicle loading safety system according to any one of examples 1-9.

Example 11: A method for increasing safety during a loading event for a parked vehicle, the method comprising:
- receiving, by processing circuitry of a computer system, from a parking brake subsystem, parking brake input indicating that a parking brake of the vehicle is currently engaged,
- receiving, by the processing circuitry, from a gradient determining subsystem, gradient input indicating a gradient of the ground on which the vehicle is standing, and comparing, by the processing circuitry, said indicated gradient with a predefined threshold gradient,
- determining, by the processing circuitry, based on the received parking brake input and the received gradient input, that the vehicle is currently parked in a slope at a gradient which is larger than the predefined threshold gradient,
- receiving, by the processing circuitry, from a load determining subsystem, vehicle load input indicating a value of the actual vehicle load, and comparing, by the processing circuitry, the value of the actual vehicle load with a maximum allowable load value,
- determining, by the processing circuitry, based on the received vehicle load input, that the value of the actual vehicle load exceeds the maximum allowable load value, and
- controlling, by the processing circuitry, based on the determination that the value of the actual vehicle load exceeds the maximum allowable load value, an activation of a safety action in order to reduce the risk of the vehicle starting to roll during the loading event.

Example 12: The method of example 11, wherein said safety action comprises issuing an alarm or warning to a driver of the vehicle.

Example 13: The method according to any one of examples 11-12, wherein said safety action comprises engaging one or more other brakes of the vehicle in addition to the already engaged parking brake.

Example 14: The method according to any one of examples 11-13, wherein said safety action comprises engaging a service brake of the vehicle.

Example 15: The method according to example 14, wherein the vehicle comprises:
a pressurized reservoir containing a pressurized fluid,
service brakes having brake chambers,
a fluid passage extending from a first outlet of the pressurized reservoir to the brake chambers,
a driver-operated foot valve provided in the fluid passage for controlling the pressurized fluid to be delivered to the brake chambers for engaging the service brakes,
the pressurized reservoir having a second outlet,
a bypass passage extending from the second outlet to a position at the fluid passage between the foot valve and the brake chambers,
wherein said safety action comprises opening said bypass passage so that the pressurized fluid reaches the brake chambers so that the service brakes are engaged even if the foot valve is closed.

Example 16: The method according to example 15, the vehicle further comprising a valve, such as a solenoid valve, controlling the fluid flow through the bypass passage, wherein the valve is in a normally closed position,
wherein the method further comprises, upon determination by the processing circuitry that the value of the actual vehicle load exceeds the maximum allowable load value, opening the valve so as to activate the safety action.

Example 17: The method according to any one of examples 11-16, wherein said safety action comprises:
- lowering a lift axle, such as a pusher axle or a tag axle, so that wheels of the lift axle come into contact with the ground, and
engaging brakes of the lift axle.

Example 18: The method according to any one of examples 11-17, wherein said maximum allowable load value is a predefined maximum allowable load value stored in an electronic memory included in, or accessible by, the processing circuitry.

Example 19: The method according to any one of examples 11-17, wherein said maximum allowable load value is a variable maximum allowable load value, the method further comprising: determining, by the processing circuitry, the maximum allowable load value based on the received gradient input.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle loading safety system, wherein the vehicle loading safety system comprises a computer system comprising a processing circuitry configured to:
- receive, from a parking brake subsystem, parking brake input indicating that a parking brake of the vehicle is currently engaged,
- receive, from a gradient determining subsystem, gradient input indicating a gradient of the ground on which the vehicle is standing, and compare said indicated gradient with a predefined threshold gradient,
- determine, based on the received parking brake input and the received gradient input, that the vehicle is currently parked in a slope at a gradient which is larger than the predefined threshold gradient,
- receive, from a load determining subsystem, vehicle load input indicating a value of the actual vehicle load, and compare the value of the actual vehicle load with a maximum allowable load value,
- determine, based on the received vehicle load input, that the value of the actual vehicle load exceeds the maximum allowable load value, and
- control, based on the determination that the value of the actual vehicle load exceeds the maximum allowable load value, an activation of a safety action.

2. The vehicle loading safety system according to claim 1, wherein said safety action comprises issuing an alarm or warning to a driver of the vehicle.

3. The vehicle loading safety system according to any one of claims 1-2, wherein said safety action comprises engaging one or more other brakes of the vehicle in addition to the already engaged parking brake.

4. The vehicle loading safety system according to any one of claims 1-3, wherein said safety action comprises engaging a service brake of the vehicle.

5. The vehicle loading safety system according to claim 4, further comprising:
a pressurized reservoir containing a pressurized fluid,
service brakes having brake chambers,
a fluid passage extending from a first outlet of the pressurized reservoir to the brake chambers,
a driver-operated foot valve provided in the fluid passage for controlling the pressurized fluid to be delivered to the brake chambers for engaging the service brakes,
the pressurized reservoir having a second outlet,
a bypass passage extending from the second outlet to a position at the fluid passage between the foot valve and the brake chambers,
wherein said safety action comprises opening said bypass passage so that the pressurized fluid reaches the brake chambers so that the service brakes are engaged even if the foot valve is closed.

6. The vehicle loading safety system according to claim 5, further comprising a valve, such as a solenoid valve, controlling the fluid flow through the bypass passage, wherein the valve is in a normally closed position, and wherein upon determination by the processing circuitry that the value of the actual vehicle load exceeds the maximum allowable load value, the processing circuitry is configured to open the valve so as to activate the safety action.

7. The vehicle loading safety system according to any one of claims 1-6, wherein said safety action comprises:
- lowering a lift axle, such as a pusher axle or a tag axle, so that wheels of the lift axle come into contact with the ground, and
- engaging brakes of the lift axle.

8. The vehicle loading safety system according to any one of claims 1-7, wherein said maximum allowable load value is a predefined maximum allowable load value stored in an electronic memory included in, or accessible by, the processing circuitry.

9. The vehicle loading safety system according to any one of claims 1-7, wherein said maximum allowable load value is a variable maximum allowable load value wherein the processing circuitry determines the maximum allowable load value based on the received gradient input.

10. A vehicle comprising the vehicle loading safety system according to any one of claims 1-9.

11. A method for increasing safety during a loading event for a parked vehicle, the method comprising:
- receiving, by processing circuitry of a computer system, from a parking brake subsystem, parking brake input indicating that a parking brake of the vehicle is currently engaged,
- receiving, by the processing circuitry, from a gradient determining subsystem, gradient input indicating a gradient of the ground on which the vehicle is standing, and comparing, by the processing circuitry, said indicated gradient with a predefined threshold gradient,
- determining, by the processing circuitry, based on the received parking brake input and the received gradient input, that the vehicle is currently parked in a slope at a gradient which is larger than the predefined threshold gradient,
- receiving, by the processing circuitry, from a load determining subsystem, vehicle load input indicating a value of the actual vehicle load, and comparing, by the processing circuitry, the value of the actual vehicle load with a maximum allowable load value,
- determining, by the processing circuitry, based on the received vehicle load input, that the value of the actual vehicle load exceeds the maximum allowable load value, and
- controlling, by the processing circuitry, based on the determination that the value of the actual vehicle load exceeds the maximum allowable load value, an activation of a safety action in order to reduce the risk of the vehicle starting to roll during the loading event.

12. The method of claim 11, wherein said safety action comprises issuing an alarm or warning to a driver of the vehicle.

13. The method according to any one of claims 11-12, wherein said safety action comprises engaging one or more other brakes of the vehicle in addition to the already engaged parking brake.

14. The method according to any one of claims 11-13, wherein said safety action comprises engaging a service brake of the vehicle.

15. The method according to claim 14, wherein the vehicle comprises:
a pressurized reservoir containing a pressurized fluid,
service brakes having brake chambers,
a fluid passage extending from a first outlet of the pressurized reservoir to the brake chambers,
a driver-operated foot valve provided in the fluid passage for controlling the pressurized fluid to be delivered to the brake chambers for engaging the service brakes,
the pressurized reservoir having a second outlet,
a bypass passage extending from the second outlet to a position at the fluid passage between the foot valve and the brake chambers,
wherein said safety action comprises opening said bypass passage so that the pressurized fluid reaches the brake chambers so that the service brakes are engaged even if the foot valve is closed.
